Europäisches Patentamt

European Patent Office

Office européen des brevets

(19)

(11) Veröffentlichungsnummer : **0 376 426 B1**

(12) # EUROPÄISCHE PATENTSCHRIFT

(45) Veröffentlichungstag der Patentschrift :
**22.04.92 Patentblatt 92/17**

(51) Int. Cl.$^5$ : **B60C 27/14,** B60C 27/06

(21) Anmeldenummer : **89250133.9**

(22) Anmeldetag : **29.12.89**

(54) **Gleitschutzvorrichtung für Fahrzeugräder.**

(30) Priorität : **30.12.88 DE 3844491**

(43) Veröffentlichungstag der Anmeldung :
**04.07.90 Patentblatt 90/27**

(45) Bekanntmachung des Hinweises auf die
Patenterteilung :
**22.04.92 Patentblatt 92/17**

(84) Benannte Vertragsstaaten :
**AT CH DE FR IT LI**

(56) Entgegenhaltungen :
**EP-A- 0 264 343
WO-A-84/04071
DE-A- 3 545 529
US-A- 2 601 882**

(73) Patentinhaber : **RUD-KETTENFABRIK RIEGER
& DIETZ GMBH U. CO.
Friedensinsel 1
W-7080 Aalen 1 (DE)**

(72) Erfinder : **Zeiser, Peter, Dipl.-Ing.
Eckener Höhe No. 1
W-7080 Aalen-Wasseralfingen (DE)**

(74) Vertreter : **Böning, Manfred, Dr. Ing. et al
Patentanwälte Dipl.-Ing. Dieter Jander Dr. Ing.
Manfred Böning Leistikowstrasse 2
W-1000 Berlin 19 (DE)**

EP 0 376 426 B1

## Beschreibung

Die Erfindung betrifft eine Gleitschutzvorrichtung für Fahrzeugräder mit einer am Rad befestigbaren, gegenüber diesem drehbaren Halterung für mindestens ein im montierten Zustand der Gleitschutzvorrichtung an der Radaußenseite angeordnetes Halteelement zur Halterung von über den Radumfang verteilten Gleitschutzmitteln, bei der die Halterung unter Federeinwirkung gegen das Rad gezogen wird.

Aus der DE-A- 35 45 529 ist eine Gleitschutzvorrichtung der vorstehenden Art bekannt, deren Halterung mit mehreren Gummispannsträngen ausgestattet ist, die an ihren Enden Haken aufweisen, welche in Aussparungen der Felgen von Fahrzeugrädern einhängbar sind. Bei der Montage derartiger Gleitschutzvorrichtungen wird ein Teil ihres geschlossenen Laufnetzes von der Außenseite des Fahrzeugrades korb- oder käfigartig über dessen außerhalb der Bodenaufstandsfläche liegenden Laufflächenteil gestülpt und der außerhalb des Laufflächenbereiches verbliebene Rest des Laufnetzes beim Anfahren durch die Gummispannstränge automatisch ebenfalls auf die Lauffläche überführt. Die Montagevorteile sind eklatant. Wenn die bebekannte Lösung gleichwohl nicht voll zu befriedigen vermag, so deshalb, weil sie der Formvielfalt von Fahrzeugfelgen nicht gerecht wird, dies ganz abgesehen davon, daß bei einigen Felgentypen ein Einhängen von Haken gänzlich unmöglich ist. Hinzu kommt, daß bei bestimmten Felgen und Fahrzeugtypen der Zwischenraum zwischen der Felgeninnenseite und Teilen des Bremssystems so klein ist, daß er das Einhängen von Haken ebenfalls unmöglich macht. Als problematisch erweist sich darüber hinaus der Umstand, daß insbesondere moderne Aluminiumfelgen eine vergleichsweise große Wanddicke haben, die eine Hakenbefestigung zumindest erschwert. Die Notwendigkeit zur Handhabung mehrerer Spannstränge beeinträchtigt den Bedienungskomfort bei der Montage und Demontage, zumal aufgrund der radialen Anordnung der Spannstränge in ergonomisch ungünstiger Weise vergleichsweise große Spannkräfte aufgebracht werden müssen, und dies sowohl beim Ein- als auch beim Aushängen eines jeden Hakens. Im Hinblick darauf, daß der Abstand der Felgenlöcher von der Radachse bei verschiedenen Felgen unterschiedlich groß sein kann, muß die Länge der Spannstränge bei der bekannten Konstruktion veränderbar sein, denn nur durch eine entsprechende Längenanpassung lassen sich funktionsgerechte, d.h. weder zu große noch zu kleine Spannkräfte realisieren.

Der Erfindung liegt die Aufgabe zugrunde, eine Gleitschutzvorrichtung der in Betracht gezogenen Art so auszugestalten, daß sie sich in ergonomisch günstiger Weise mit Hilfe eines zentralen Betätigungsorganes schnell und einfach spannen läßt, ohne daß ihre Spannfeder gleichzeitig als Befestigungsmittel genutzt wird. Diese Aufgabe wird erfindungsgemäß dadurch gelöst, daß die Gleitschutzvorrichtung mit einem sich vom Zentrum der Halterung nach Art eines einarmigen Hebels radial nach außen erstreckenden Anschlußteil mit einem Befestigungselement zur Befestigung der Halterung am Fahrzeugrad versehen ist, daß im Zentrum der Halterung ein Betätigungsorgan für eine Spannfeder angeordnet ist und daß das Anschlußteil und die Spannfeder unverlierbar miteinander verbunden sind.

Die erfindungsgemäße Vorrichtung bietet den Vorteil, daß bei ihr die Funktionen Befestigen und Spannen auf unterschiedliche Bauteile, nämlich das Anschlußteil und die Spannfeder, verteilt sind, und daß das im Zentrum der Halterung angeordnete Betätigungsorgan für die Spannfeder nicht nur mehrere Spannvorgänge überflüssig macht, sondern auch bequem handhabbar ist. Der Benutzer der erfindungsgemäßen Gleitschutzvorrichtung kann diese, ohne gleichzeitig Spannkräfte aufbringen zu müssen, gewissermaßen in aller Ruhe am Fahrzeugrad befestigen, um im Anschluß hieran an einer einzigen prädestinierten Stelle nicht nur einfach, sondern auch schnell die für das Aufziehen des außerhalb der Lauffläche des Rades verbliebenen Teiles des Laufnetzes erforderliche richtige Spannkraft aufzubringen.

Die Erfindung wird im folgenden anhand der beigefügten, mehrere bevorzugte Ausführungsbeispiele darstellenden Zeichnung näher erläutert. Es zeigen:

Fig. 1 die perspektivische Ansicht einer auf ein Fahrzeugrad montierten Gleitschutzvorrichtung,

Fig. 2 eine Teilansicht der Gleitschutzvorrichtung gemäß Fig. 1 während des Auf- bzw. Anlegens auf bzw. an das Fahrzeugrad,

Fig. 3 in vergrößertem Maßstab Einzelheiten des Befestigungs- und Spannmechanismus der Gleitschutzvorrichtung gemäß Fig. 1 und 2 im ungespannten Zustand,

Fig. 4 einen Schnitt längs der Linie IV-IV in Fig. 3,

Fig. 5 einen Schnitt längs der Linie V-V in Fig. 3,

Fig. 6 einen modifizierten Befestigungs- und Spannmechanismus im ungespannten Zustand,

Fig. 7 den Befestigungs- und Spannmechanismus gemäß Fig. 6 in der Spannstellung und

Fig. 8 einen weiteren modifizierten Befestigungs- und Spannmechanismus.

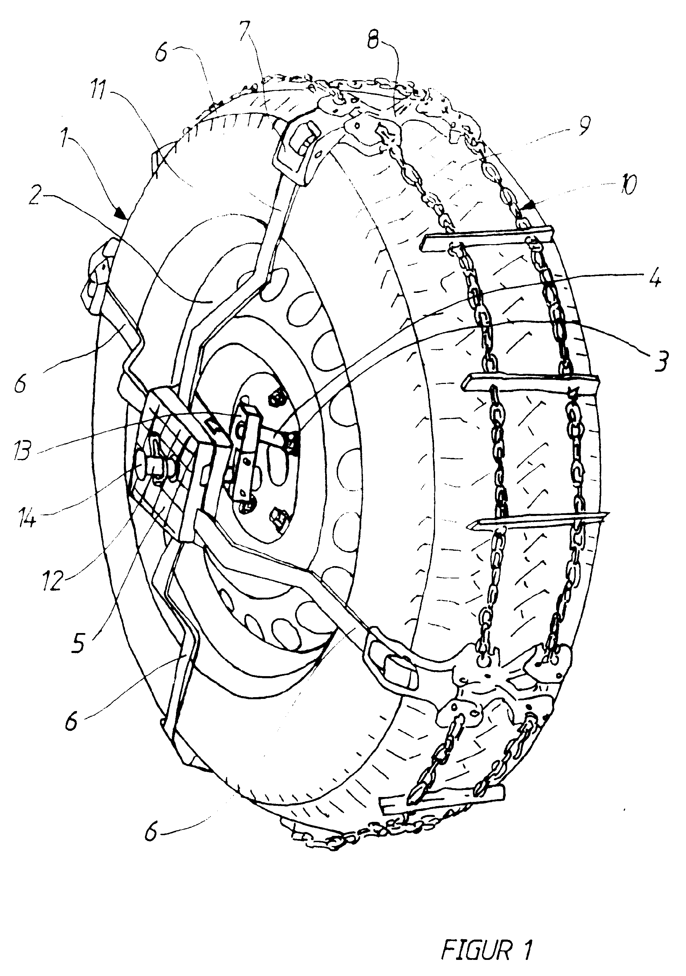

In Fig. 1 ist 1 ein Fahrzeugrad mit einer Felge 2, die durch Radschrauben 3 mit einer nicht dargestellten Radnabe verbunden ist. Eine der Radschrauben 3 ist als Spezialschraube ausgebildet, um den Anschluß eines Befestigungselementes 4 einer auf das Fahrzeugrad 1 aufgezogenen Gleitschutzvorrichtung zu ermöglichen. Die Gleitschutzvorrichtung besitzt eine zentrale Halterung 5 für vier in der Halterung 5 um begrenzte Beträge hin- und herverschiebbare Halteelemente 6, deren der Halterung 5 abgewandte Enden gelenkig mit Auslegern 7 von Gleitschutzelementen 8 verbunden sind. Die Gleitschutzelemente 8 bilden zusammen mit nicht näher bezeichneten Kettensträngen und Querstegen Teile eines die Lauffläche 9 des Fahrzeugrades bedeckenden, einen in sich geschlossenen Ring formenden Laufnetzes 10. Das Laufnetz 10 wird durch die Halteelemente 6 auf der Lauffläche 9 gehalten, ohne daß es einer inneren Seitenkette oder vergleichbarer Mittel bedarf.

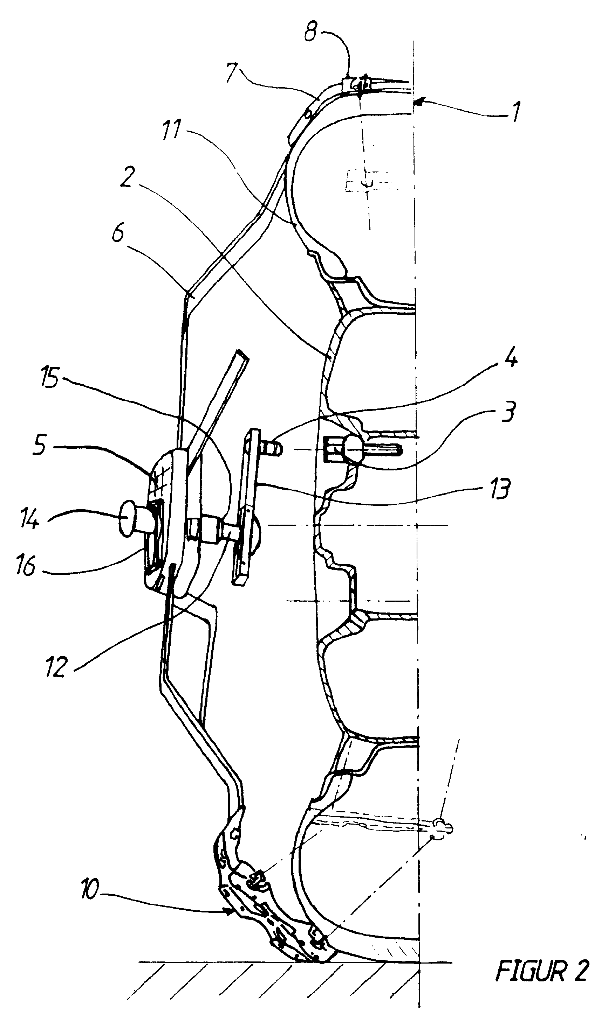

Um das Aufziehen des Laufnetzes 10 auf die Lauffläche des Fahrzeuges 1 und dessen Verbleib auf der Lauffläche 9 auch in kritischen Situationen, wie sie beispielsweise bei einer scharfen Kurvenfahrt auftreten können, zu gewährleisten, müssen die Halteelemente 6 federnd gegen die Flanke 11 des Reifens des Fahrzeugrades gedrückt werden. Hierzu dient eine einzige zentrale Spannfeder 12, die drehbar in der Halterung 5 und/oder einem Anschlußteil 13 gelagert ist. Halterung 5, Spannfeder 12, Anschlußteil 13 und Befestigungselement 4 sind unverlierbar miteinander verbunden und bilden zusammen mit den Halteelementen 6 und dem Laufnetz ein einheitlich handhabbares Gebilde. Während die Fig. 1 die fertig montierte Gleitschutzvorrichtung zeigt, ist die Gleitschutzvorrichtung in Fig. 2 in einer Zwischenposition während der Montage dargestellt. Man erkennt, daß auf dem zugänglichen, d.h. außerhalb der Bodenaufstandsfläche des Fahrzeugrades 1 liegenden Teil des Fahrzeugrades bereits ein Abschnitt des Laufnetzes 10 aufgelegt ist und der Benutzer problemlos das Befestigungselement 4 mit der Radschraube 3 verbinden kann. Die Verbindung zwischen dem Befestigungselement 4 und der Radschraube 3 ist vorzugsweise als Steck- oder Klemmverbindung ausgebildet. Denkbar sind allerdings auch Schraubverbindungen oder Verbindungen nach Art eines Bajonettverschlusses. Nach dem Verbinden des Befestigungselementes 4 mit der Radschraube 3 braucht der Benutzer nur noch das Betätigungsorgan 14 zu erfassen, die Spannfeder 12 zu spannen und in der Spannstellung zu arretieren. Die Kombination eines einzigen Befestigungselementes 4 mit einem einzelnen zentralen Betätigungsorgan 14 für nur eine Spannfeder 12 bringt eine erhebliche Verbesserung des Bedienungskomforts mit sich und erweist sich als besonders glücklich.

Zum Arretieren der aus Gummi oder einem gummielastischen Material bestehenden Spannfeder 12 in der Spannstellung dienen ein von einem Bund der Spannfeder 12 gebildeter Anschlag 15 und ein mit diesem zusammenwirkender Gegenanschlag 16, der an einem Schieber 17 mit einer schlüssellochförmigen Öffnung 18 angeordnet ist. Der Schieber 17 mit dem Gegenanschlag 16 ist hin- und herverschiebbar in einer Führung an der Halterung 5 gelagert. Er kann zwei Positionen einnehmen. In der einen Position läßt sich die Spannfeder 12 ungehindert axial hin- und herverschieben. In der zweiten Stellung ist sie in der Spannstellung arretiert.

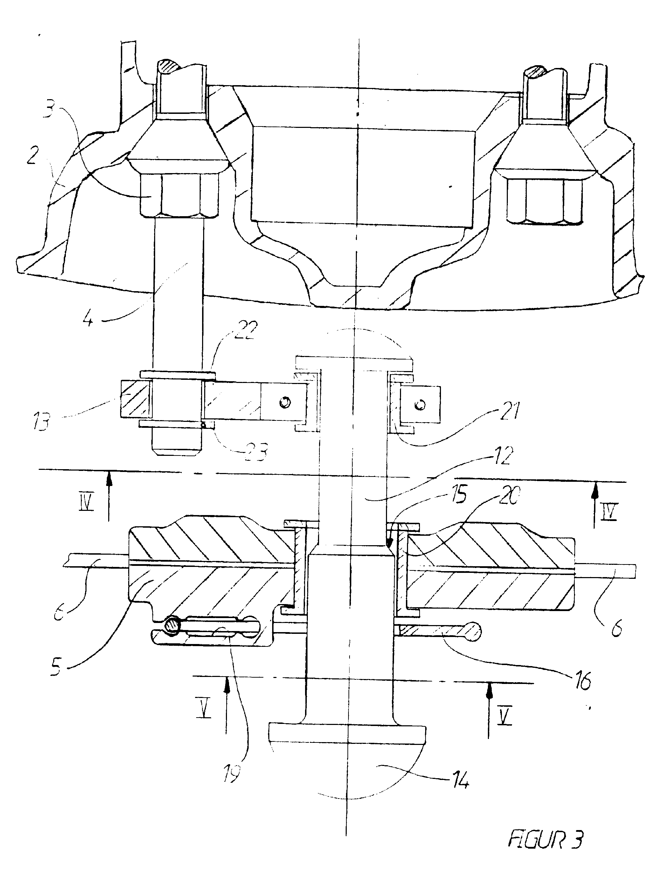

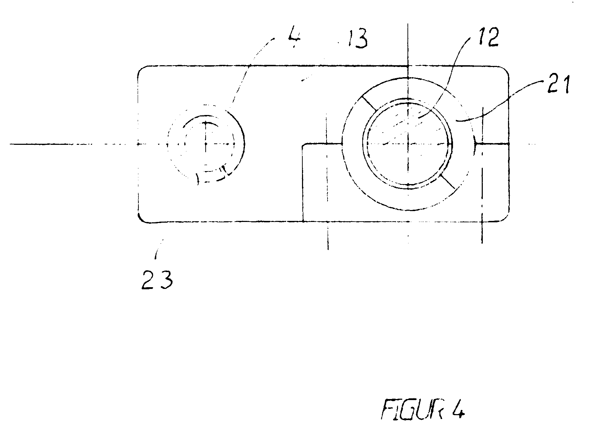

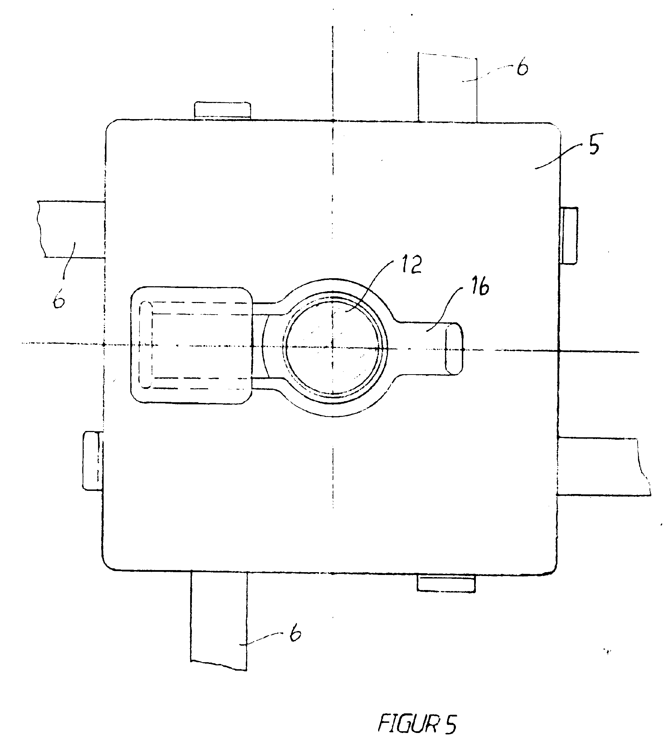

Die Figuren 3 bis 5 zeigen in vergrößertem Maßstab Einzelheiten der wesentlichen Teile des Befestigungs- und Spannmechanismus der in den Figuren 1 und 2 dargestellten Gleitschutzvorrichtung.

Die Spannfeder 12 hat zwei pilzkopfartig ausgebildete Enden, von denen eines das Betätigungsorgan 14 bildet. Um eine für die Funktion der Gleitschutzvorrichtung wichtige Drehbewegung zwischen der Halterung 5 und dem von den Halteelementen 6 gehaltenen Laufnetz 10 einerseits und dem Fahrzeugrad 1 andererseits zu gewährleisten, ist die Spannfeder 12 sowohl im Anschlußteil 13 als auch in der Halterung 5 drehbar in geteilten Buchsen 20,21 gelagert. Auch das Betätigungsorgan 14 ist dreh-, zumindest aber schwenkbar im sich radial nach außen erstreckenden Anschlußteil 13 geführt, wobei es von in Nuten greifenden Federringen 22,23 gehalten wird.

Zum Aufbringen der Spannkraft muß der Benutzer der Gleitschutzvorrichtung eine Zugkraft in die Spannfeder 12 einleiten. Dies fällt ihm leicht, da er lediglich das Betätigungsorgan 14 vom Fahrzeugrad 1 weg zum eigenen Körper ziehen muß, bis er den Gegenanschlag 16 mit dem Anschlag 15 in Verbindung bringen kann, indem er den schmaleren Teil der Öffnung 18 des Schiebers 17 über den dünneren Abschnitt des zylindrischen Schaftes der Spannfeder 12 schiebt.

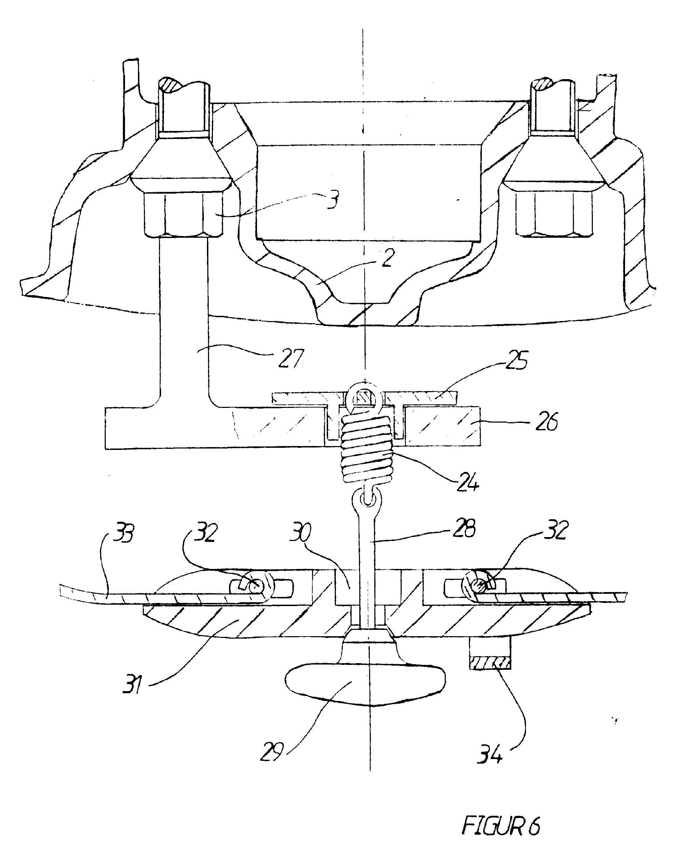

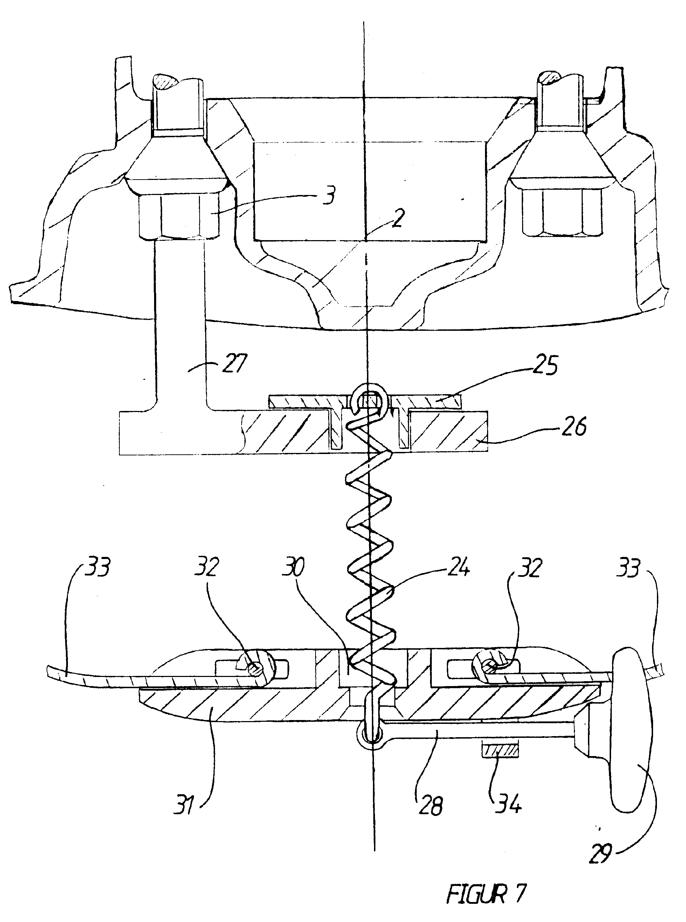

Statt einer Spannfeder 12 aus Gummi oder gummielastischem Material kann auch eine als Schraubenfeder ausgebildete Spannfeder 24 verwendet werden, wie dies in den Figuren 6 und 7 dargestellt ist. Das eine Ende der Spannfeder 24 ist mit einem Halteteller 25 verbunden, der mit einem Ansatz drehbar in einem Anschlußteil 26 gelagert ist, das zusammen mit dem Befestigungselement 27 eine L-förmige Einheit bildet. Um auch in diesem Falle Schwenkbewegungen zwischen der Radschraube 3 und dem Befestigungselement 27 zu ermöglichen, sollte die Verbindung des Befestigungselementes 27 mit der Radschraube 3 entsprechend ausgebildet sein.

Das dem Halteteller 25 abgewandte Ende der Spannfeder 24 ist über zwei ineinandergreifende Ösen schwenkbar mit einem Arretierungsknebel 28 verbunden. Am der Spannfeder 24 abgewandten Ende des Arretierungsknebels 28 ist ein Betätigungsorgan 29 angeordnet, das durch eine Öffnung 30 einer Halterung 31 ragt, an der auf Bolzen 32 schwenkbar Halteelemente 33 für das Laufnetz der Gleitschutzvorrichtung angeordnet sind. Auf eine Verschiebbarkeit der Halteelemente 33 wurde in diesem Fall bewußt verzichtet, da die Art und Anordnung der Spannfeder 24 ausreichend große Relativbewegungen zwischen der Halterung 31 und dem Fahrzeugrad in einer zum Fahrzeugrad im wesentlichen parallelen Ebene zuläßt, wenn die mit den jeweiligen Halteelementen 33 verbundenen Gleitschutzelemente 8 die Fahrbahn passieren.

Während in Fig. 6 der Halte- und Spannmechanismus im ungespannten Zustand dargestellt ist, zeigt Figur 7 die Verhältnisse im gespannten Zustand. In der Spannstellung ist der Arretierungsknebel 28 in eine Parallellage zur Halterung 31 geschwenkt. Er wird in dieser Position durch ein als Bügel ausgebildetes Sicherungselement 34 gesichert.

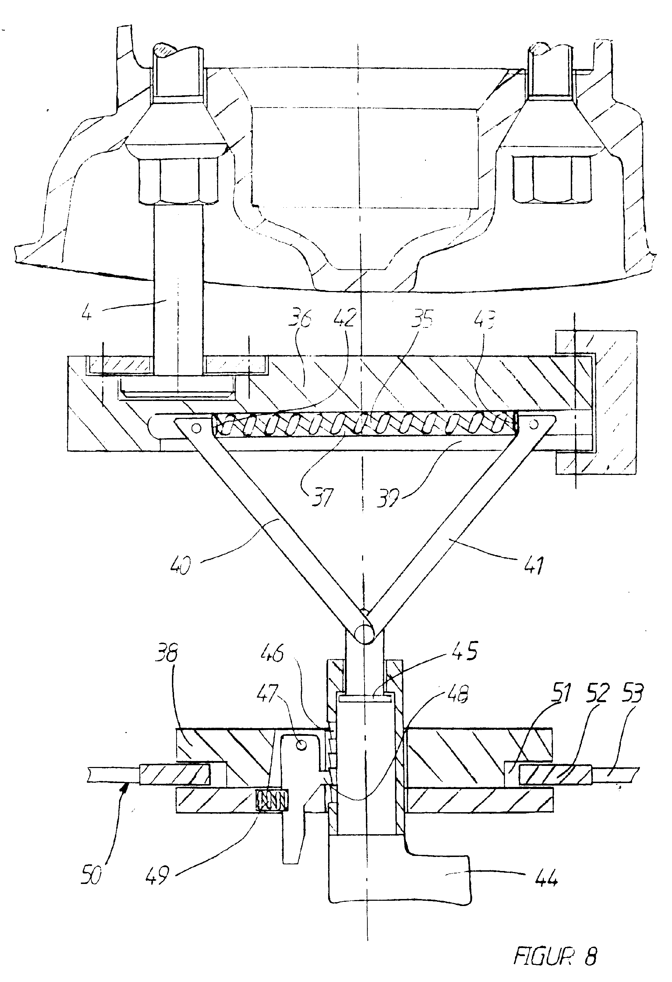

Während die bisher beschriebenen Befestigungs- und Spannmechanismen lediglich in einer Stelle arretierbar sind, zeigt die Figur 8 eine Lösung, bei der eine Arretierung in mehreren Stufen möglich ist und bei der zudem nicht eine Zugfeder, sondern eine Druckfeder als Spannfeder 35 Verwendung findet.

Die Spannfeder 35 ist in einer von einem Anschlußteil 36 gebildeten Führung 37 geführt. Die Führung 37 weist an ihrer einer Halterung 38 zugewandten Seite einen Schlitz 39 für die Enden zweier als Lenker ausgebildeter, V-förmig angeordneter Zugstangen 40,41 auf. Die ebenfalls in der Führung 37 geführten Enden der Zugstangen 40,41 liegen mit Stützflächen 42,43 gegen die Enden der Spannfeder 35 an und drücken diese in Abhängigkeit von der Größe des von ihnen eingeschlossenen Winkels mehr oder weniger stark zusammen.

Um die Drehbarkeit zwischen der Halterung 38 und dem Fahrzeugrad nicht zu beeinträchtigen, ist das Betätigungsorgan 44 über einen Wirbel 45 mit den der Spannfeder 35 abgewandten Enden der Zugstangen 40,41 verbunden.

Zum Arretieren des Betätigungsorganes 44 in der jeweiligen Spannstellung dienen eine Zahnstange 46 mit einem Sägezahnprofil und eine der Zahnstange 46 zugeordnete, bei 47 schwenkbar gelagerte Sperrklinke 48, die unter der Einwirkung einer Druckfeder 49 steht.

Während bei der zuvor beschriebenen Konstruktion den Halterungen mehrere Halteelemente zugeordnet sind, weist die zuletzt beschriebene Gleitschutzvorrichtung nur ein einzelnes Halteelement 50 auf, welches von einem in einer Nut 51 der Halterung 38 geführten Ring 52 und mit diesem verbundenen Speichen 53 gebildet wird. Mit den Enden der Speichen sind ähnlich wie im Falle der Figuren 1 und 2 Ausleger 7 von Gleitschutzelementen gelenkig gekoppelt.

Es versteht sich, daß die Bauteile der verschiedenen beschriebenen Befestigungs- und Spannmechanismen gegeneinander ausgetauscht werden können. Es ist also beispielsweise möglich, die Enden der Zugstangen 40 und 41 mit einem Arretierungsknebel zu verbinden oder aber der Spannfeder 24 ein Betätigungsorgan nach Art des Betätigungsorganes 44 zuzuordnen.

## Patentansprüche

1. Gleitschutzvorrichtung für Fahrzeugräder mit einer am Rad (1) befestigbaren, gegenüber diesem drehbaren Halterung (5,31,38) für mindestens ein im montierten Zustand der Gleitschutzvorrichtung an der Radaußenseite angeordnetes Halteelement (6,33,50) zur Halterung von über den Radumfang verteilten Gleitschutzmitteln, bei der die Halterung (5,31,38) unter Federeinwirkung gegen das Rad (1) gezogen wird, dadurch gekennzeichnet, daß sie mit einem sich vom Zentrum der Halterung nach Art eines einarmigen Hebels radial nach außen erstreckenden Anschlußteil (13,26,36) mit einem Befestigungselement (4,27) zur Befestigung der Halterung (5,31,38) am Fahrzeugrad (1) versehen ist, daß im Zentrum der Halterung (5,31,38) ein Betätigungsorgan (14,29,44) für eine Spannfeder (12,24,35) angeordnet ist und daß das Anschlußteil (13,26,36) und die Spannfeder (12,24,35) unverlierbar miteinander verbunden sind.

2. Gleitschutzvorrichtung nach Anspruch 1, dadurch gekennzeichnet, daß das Befestigungselement (4,27) gegenüber der Achse des Betätigungsorganes (14,29,44) versetzt am Anschlußteil (13,26,36) angeordnet ist.

3. Gleitschutzvorrichtung nach Anspruch 1 oder 2, dadurch gekennzeichnet, daß das Anschlußteil (13,26,36) und das Befestigungselement (4,27) winklig zueinander angeordnet sind.

4. Gleitschutzvorrichtung nach Anspruch 2 oder 3, dadurch gekennzeichnet, daß das Befestigungselement (27) und das Anschlußteil (26) eine im wesentlichen L-förmige Einheit bilden.

5. Gleitschutzvorrichtung nach einem der Ansprüche 1 bis 4, dadurch gekennzeichnet, daß die Spannfeder (12,24, 35) drehbar gegenüber dem Anschlußteil (13,26,36) gelagert ist.

6. Gleitschutzvorrichtung nach einem der Ansprüche 1 bis 5, dadurch gekennzeichnet, daß das Befestigungselement (4) drehbar im Anschlußteil (13,36) gelagert ist.

7. Gleitschutzvorrichtung nach einem der Ansprüche 1 bis 6, dadurch gekennzeichnet, daß das Befestigungselement (4,27) mit Mitteln zu seiner lösbaren Verbindung mit einer Radschraube (3) oder Radmutter versehen ist.

8. Gleitschutzvorrichtung nach einem der Ansprüche 1 bis 7, dadurch gekennzeichnet, daß die Spannfeder (12,24, 35) in der Spannstellung arretierbar ist.

9. Gleitschutzvorrichtung nach einem der Ansprüche 1 bis 8, dadurch gekennzeichnet, daß die Spannfeder (12,24) als Zugfeder ausgebildet ist.

10. Gleitschutzvorrichtung nach einem der Ansprüche 1 bis 9, dadurch gekennzeichnet, daß der Spannfeder (12) mindestens ein zu ihrer Arretierung dienender Anschlag (15) zugeordnet ist.

11. Gleitschutzvorrichtung nach Anspruch 10, dadurch gekennzeichnet, daß der Anschlag (15) von einem Ringbund der Spannfeder (12) gebildet wird.

12. Gleitschutzvorrichtung nach Anspruch 10 oder 11, dadurch gekennzeichnet, daß dem Anschlag (15) der Spannfeder (12) ein schieberartig ausgebildeter Gegenanschlag (16) zugeordnet ist.

13. Gleitschutzvorrichtung nach Anspruch 12, dadurch gekennzeichnet, daß der Gegenanschlag (16) unverlierbar an der Halterung (5) gelagert ist.

14. Gleitschutzvorrichtung nach einem der Ansprüche 1 bis 13, dadurch gekennzeichnet, daß die Längsachse der Spannfeder (12,24) bei montierter Gleitschutzvorrichtung im wesentlichen mit der Achse des Fahrzeugrades (1) fluchtet.

15. Gleitschutzvorrichtung nach einem der Ansprüche 1 bis 14, dadurch gekennzeichnet, daß die Spannfeder (12) aus Gummi oder einem federelastischen Kunststoff besteht.

16. Gleitschutzvorrichtung nach Anspruch 15, dadurch gekennzeichnet, daß die Spannfeder (12) einen zylindrischen Schaft hat.

17. Gleitschutzvorrichtung nach Anspruch 15 oder 16, dadurch gekennzeichnet, daß die Enden der Spannfeder (12) pilzkopfartig ausgebildet sind.

18. Gleitschutzvorrichtung nach einem der Ansprüche 1 bis 14, dadurch gekennzeichnet, daß die Spannfeder (24) von einer Schraubenfeder gebildet wird.

19. Gleitschutzvorrichtung nach Anspruch 18, dadurch gekennzeichnet, daß die Spannfeder (24) mittels eines an ihrem einen Ende angeordneten Haltetellers (25) mit dem Anschlußteil (26) verbunden ist.

20. Gleitschutzvorrichtung nach Anspruch 19, dadurch gekennzeichnet, daß der Halteteller (25) mit einem zylindrischen Ansatz zu seiner drehbaren Lagerung im Anschlußteil (26) versehen ist.

21. Gleitschutzvorrichtung nach einem der Ansprüche 1 bis 20, dadurch gekennzeichnet, daß die Spannfeder (24) mit einem Arretierungsknebel (28) verbunden ist.

22. Gleitschutzvorrichtung nach Anspruch 21, dadurch gekennzeichnet, daß der Arretierungsknebel (28) schwenkbar mit der Spannfeder (24) verbunden ist.

23. Gleitschutzvorrichtung nach Anspruch 21, dadurch gekennzeichnet, daß der Arretierungsknebel (28) aus einer Montagestellung, in der seine Längsachse mit der Längsachse der Spannfeder (24) fluchtet, in eine Arretierungsstellung überführbar ist, in der seine Längsachse im wesentlichen senkrecht zur Längsachse der Spannfeder (24) verläuft.

24. Gleitschutzvorrichtung nach Anspruch 23, dadurch gekennzeichnet, daß der Arretierungsknebel (28) durch ein Sicherungselement (34) in der Arretierungsstellung gehalten wird.

25. Gleitschutzvorrichtung nach einem der Ansprüche 1 bis 11, dadurch gekennzeichnet, daß die Spannfeder (35) als Druckfeder ausgebildet ist.

26. Gleitschutzvorrichtung nach Anspruch 25, dadurch gekennzeichnet, daß die Längsachse der Spannfeder (35) im wesentlichen senkrecht zur Achse des Fahrzeugrades (1) orientiert ist.

27. Gleitschutzvorrichtung nach Anspruch 25 oder 26, dadurch gekennzeichnet, daß die Spannfeder (35) in einer Führung (37) geführt ist.

28. Gleitschutzvorrichtung nach Anspruch 27, dadurch gekennzeichnet, daß die Führung (37) von einem hülsenförmigen Teil des Anschlußteiles (36) gebildet wird.

29. Gleitschutzvorrichtung nach einem der Ansprüche 25 bis 28, dadurch gekennzeichnet, daß die Halterung (38) über auf die Enden der Spannfeder (35) einwirkende, V-förmig angeordnete, als Lenker ausgebildete Zugstangen (40,41) mit dem Anschlußteil (36) verbunden ist.

30. Gleitschutzvorrichtung nach Anspruch 29, dadurch gekennzeichnet, daß die der Spannfeder (35) abgewandten Enden der Zugstangen (40,41) gelenkig mit dem Betätigungsorgan (44) verbunden sind.

31. Gleitschutzvorrichtung nach einem der Ansprüche 1 bis 30, dadurch gekennzeichnet, daß das Betätigungsorgan (44) mit mindestens einem zum Arretieren der Spannfeder (35) in der Spannstellung dienenden Anschlag (46) versehen ist.

32. Gleitschutzvorrichtung nach Anspruch 31, dadurch gekennzeichnet, daß dem Anschlag (46) eine federnde Sperrklinke (48) zugeordnet ist.

33. Gleitschutzvorrichtung nach einem der Ansprüche 1 bis 32, dadurch gekennzeichnet, daß die Halterung (38) über einen Wirbel (45) mit dem Anschlußteil (36) in Verbindung steht.

34. Gleitschutzvorrichtung nach einem der Ansprüche 1 bis 33, dadurch gekennzeichnet, daß sie mehrere gelenkig mit der Halterung (31) verbundene Halteelemente (33) für ein Laufnetz (10) aufweist.

35. Gleitschutzvorrichtung nach einem der Ansprüche 1 bis 34, dadurch gekennzeichnet, daß der Spannfeder (12,24,35) eine Spannkraftanzeigevorrichtung zugeordnet ist.

## Claims

1. Anti-skid device for vehicle wheels, having a holding device (5,31,38), which can be fixed on the wheel (1) and can be rotated relative to the latter, for at least one holding element (6,33,50) arranged on the outside of the wheel in the mounted condition of the anti-skid device and intended to hold anti-skid means distributed over the circumference of the wheel, in which the holding device (5,31,38) is pulled against the wheel (1) under spring action, characterised in that it is provided with a connection part (13,26,36) extending radially outwards from the centre of the holding device in the manner of a single-armed lever and having a fixing element (4,27) for fixing the holding device (5,31,38) on the vehicle wheel (1), in that an actuating member (14,29,44) for a clamping spring (12,24,35) is arranged in the centre of the holding device (5,31,38) and in that the connection part (13,26,36) and the clamping spring (12,24,35) are connected to one another non-detachably.

2. Anti-skid device according to Claim 1, characterised in that the fixing element (4,27) is arranged on the connection part (13,26,36) in a manner offset relative to the axis of the actuating member (14,29,44).

3. Anti-skid device according to Claim 1 or 2, characterised in that the connection part (13,26,36) and the fixing element (4,27) are arranged at an angle to one another.

4. Anti-skid device according to Claim 2 or 3, characterised in that the fixing element (27) and the connection part (26) form an essentially L-shaped unit.

5. Anti-skid device according to one of Claims 1 to 4, characterised in that the clamping spring (12,24,35) is mounted in such a way as to be rotatable relative to the connection part (13,26,36).

6. Anti-skid device according to one of Claims 1 to 5, characterised in that the fixing element (4) is rotatably mounted in the connection part (13,36).

7. Anti-skid device according to one of Claims 1 to 6, characterised in that the fixing element (4,27) is provided with means for its detachable connection to a wheel bolt (3) or wheel nut.

8. Anti-skid device according to one of Claims 1 to 7, characterised in that the clamping spring (12,24,35) can be locked in the clamping position.

9. Anti-skid device according to one of Claims 1 to 8, characterised in that the clamping spring (12,24) is designed as a tension spring.

10. Anti-skid device according to one of Claims 1 to 9, characterised in that the clamping spring (12) is assigned at least one stop (15) for the purpose of locking it.

11. Anti-skid device according to Claim 10, characterised in that the stop (15) is formed by an annular shoulder of the clamping spring (12).

12. Anti-skid device according to Claim 10 or 11, characterised in that the stop (15) of the clamping spring (12) is assigned a counterstop (16) of slide-like design.

13. Anti-skid device according to Claim 12, characterised in that the counterstop (16) is mounted non-detachably on the holding device (5).

14. Anti-skid device according to one of Claims 1 to 13, characterised in that, with the anti-skid device mounted, the longitudinal axis of the clamping spring (12,24) is essentially in alignment with the axis of the vehicle wheel (1).

15. Anti-skid device according to one of Claims 1 to 14, characterised in that the clamping spring (12) is composed of rubber or a resilient plastic.

16. Anti-skid device according to Claim 15, characterised in that the clamping spring (12) has a cylindrical shank.

17. Anti-skid device according to Claim 15 or 16, characterised in that the ends of the clamping spring (12) are of mushroom-headed design.

18. Anti-skid device according to one of Claims 1 to 14, characterised in that the clamping spring (24) is formed by a helical spring.

19. Anti-skid device according to Claim 18, characterised in that the clamping spring (24) is connected to the connection part (26) by means of a holding plate (25) arranged at one of its ends.

20. Anti-skid device according to Claim 19, characterised in that the holding plate (25) is provided with a cylindrical projection for mounting it rotatably in the connection part (26).

21. Anti-skid device according to one of Claims 1 to 20, characterised in that the clamping spring (24) is connected to a locking handle (28).

22. Anti-skid device according to Claim 21, characterised in that the locking handle (28) is swivably connected to the clamping spring (24).

23. Anti-skid device according to Claim 21, characterised in that the locking handle (28) can be moved out of a mounting position, in which its longitudinal axis is in alignment with the longitudinal axis of the clamping spring (24), into a locking position, in which its longitudinal axis extends essentially perpendicular to the longitudinal axis of the clamping spring (24).

6

24. Anti-skid device according to Claim 23, characterised in that the locking handle (28) is held in the locking position by a securing element (34).

25. Anti-skid device according to one of Claims 1 to 11, characterised in that the clamping spring (35) is designed as a compression spring.

26. Anti-skid device according to Claim 25, characterised in that the longitudinal axis of the clamping spring (35) is oriented essentially perpendicular to the axis of the vehicle wheel (1).

27. Anti-skid device according to Claim 25 or 26, characterised in that the clamping spring (35) is guided in a guide (37).

28. Anti-skid device according to Claim 27, characterised in that the guide (37) is formed by a sleeve-shaped part of the connection part (36).

29. Anti-skid device according to one of Claims 25 to 28, characterised in that the holding device (38) is connected to the connection part (36) via tie rods (40,41) acting on the ends of the clamping spring (35), arranged in a V shape and designed as links.

30. Anti-skid device according to Claim 29, characterised in that those ends of the tie rods (40,41), which face away from the clamping spring (35) are connected in articulated fashion to the actuating member (44).

31. Anti-skid device according to one of Claims 1 to 30, characterised in that the actuating member (44) is provided with at least one stop (46) serving to lock the clamping spring (35) in the clamping position.

32. Anti-skid device according to Claim 31, characterised in that the stop (46) is assigned a spring pawl (48).

33. Anti-skid device according to one of Claims 1 to 32, characterised in that the holding device (38) is connected to the connection part (36) via a swivel (45).

34. Anti-skid device according to one of Claims 1 to 33, characterised in that it has a plurality of holding elements (33), connected in articulated fashion to the holding device (31), for an interlinked tread arrangement (10).

35. Anti-skid device according to one of Claims 1 to 34, characterised in that the clamping spring (12,24,35) is assigned a clamping-force indication device.

## Revendications

1. Dispositif antidérapant pour roue de véhicule, comprenant un support (5, 31, 38), agencé de façon à pouvoir être fixé sur la roue (1) et de façon à pouvoir tourner vis-à-vis de cette dernière, ce support étant prévu pour au moins un élément de maintien (6, 33, 50) qui est disposé, à l'état monté du dispositif antidérapant, sur la face extérieure de la roue et qui sert à maintenir des moyens antidérapants répartis sur la périphérie de la roue, le support (5, 31, 38) étant tiré vers la roue (1) sous l'action d'un ressort, caractérisé en ce qu'il est pourvu d'une pièce de jonction (13, 26, 36) qui s'étend radialement vers l'extérieur à partir du centre du support à la façon d'un levier à un seul bras et qui comporte un élément de fixation (4, 27) servant à la fixation du support (5, 31, 38) sur la roue (1) du véhicule, en ce qu'au centre du support (5, 31, 38) est disposé un organe (14, 29, 44) prévu pour l'actionnement d'un élément élastique de mise sous tension (12, 24, 35) et en ce que la pièce de jonction (13, 26, 36) et cet élément élastique de mise sous tension (12, 24, 35) sont réunis entre eux d'une manière imperdable.

2. Dispositif antidérapant suivant la revendication 1, caractérisé en ce que l'élément de fixation (4, 27) est disposé sur la pièce de jonction (13, 26, 36) d'une manière décalée vis-à-vis de l'axe de l'organe d'actionnement (14, 29, 44).

3. Dispositif antidérapant suivant la revendication 1 ou 2, caractérisé en ce que la pièce de jonction (13, 26, 36) et l'élément de fixation (4, 27) font un angle l'un vis-à-vis de l'autre.

4. Dispositif antidérapant suivant la revendication 2 ou 3, caractérisé en ce que l'élément de fixation (27) et la pièce de jonction (26) constituent une pièce unique pratiquement en L.

5. Dispositif antidérapant suivant l'une des revendications 1 à 4, caractérisé en ce que l'élément élastique de mise sous tension (12, 24, 35) est monté rotatif vis-à-vis de la pièce de jonction (13, 26, 36).

6. Dispositif antidérapant suivant l'une des revendications 1 à 5, caractérisé en ce que l'élément de fixation (4) est monté rotatif dans la pièce de jonction (13, 36).

7. Dispositif antidérapant suivant l'une des revendications 1 à 6, caractérisé en ce que l'élément de fixation (4, 27) est pourvu de moyens permettant sa fixation amovible sur un boulon de roue (3) ou un écrou de roue.

8. Dispositif antidérapant suivant l'une des revendications 1 à 7, caractérisé en ce que l'élément élastique de mise sous tension (12, 24, 35) est agencé de façon à pouvoir être immobilisé dans la position sous tension.

9. Dispositif antidérapant suivant l'une des revendications 1 à 8, caractérisé en ce que l'élément élastique de mise sous tension (12, 24) est réalisé sous la forme d'un ressort de traction.

10. Dispositif antidérapant suivant l'une des revendications 1 à 9, caractérisé en ce qu'au moins une butée (15), servant à son immobilisation, est associée à l'élément élastique de mise sous tension (12).

11. Dispositif antidérapant suivant la revendication 10, caractérisé en ce que la butée (15) est constituée par un épaulement annulaire de l'élément élastique de mise sous tension (12).

12. Dispositif antidérapant suivant la revendication 10 ou 11, caractérisé en ce qu'une contre-butée (16) réalisée sous la forme d'une tirette est associée à la butée (15) de l'élément élastique de mise sous tension (12).

13. Dispositif antidérapant suivant-la revendication 12, caractérisé en ce que la contre-butée (16) est montée sur le support (5) d'une manière imperdable.

14. Dispositif antidérapant suivant l'une des revendications 1 à 13, caractérisé en ce que l'axe longitudinal de l'élément élastique de mise sous tension (12, 24) est pratiquement aligné avec l'axe de la roue (1) du véhicule lorsque le dispositif antidérapant est à l'état monté.

15. Dispositif antidérapant suivant l'une des revendications 1 à 14, caractérisé en ce que l'élément élastique de mise sous tension (12) est en caoutchouc ou en une matière plastique à élasticité analogue à celle d'un ressort.

16. Dispositif antidérapant suivant la revendication 15, caractérisé en ce que l'élément élastique de mise sous tension (12) comporte une tige cylindrique.

17. Dispositif antidérapant suivant la revendications 15 ou 16, caractérisé en ce que les extrémités de l'élément élastique de mise sous tension (12) sont en forme de tête de champignon.

18. Dispositif antidérapant suivant l'une des revendications 1 à 14, caractérisé en ce que l'élément élastique de mise sous tension (24) consiste en un ressort hélicoïdal.

19. Dispositif antidérapant suivant la revendication 18, caractérisé en ce que le ressort de mise sous tension (24) est relié à la pièce de jonction (26) par un disque de maintien (25) disposé à l'une des extrémités de ce ressort.

20. Dispositif antidérapant suivant la revendication 19, caractérisé en ce que le disque de maintien (25) est pourvu d'une partie cylindrique en saillie permettant son montage rotatif dans la pièce de jonction (26).

21. Dispositif antidérapant suivant l'une des revendications 1 à 20, caractérisé en ce que l'élément élastique de mise sous tension (24) est relié à une manette d'immobilisation (28).

22. Dispositif antidérapant suivant la revendication 21, caractérisé en ce que la manette d'immobilisation (28) est reliée d'une manière pivotante à l'élément élastique de mise sous tension (24).

23. Dispositif antidérapant suivant la revendication 21, caractérisé en ce que la manette d'immobilisation (28) est agencée de façon à pouvoir passer d'une position de montage, dans laquelle son axe longitudinal est aligné avec l'axe longitudinal de l'élément élastique de mise sous tension (24), à une position d'immobilisation dans laquelle son axe longitudinal s'étend d'une manière pratiquement perpendiculaire à cet axe longitudinal de l'élément élastique de mise sous tension (24).

24. Dispositif antidérapant suivant la revendication 23, caractérisé en ce que la manette d'immobilisation (28) est maintenue dans la position d'immobilisation par un élément de sécurité (34).

25. Dispositif antidérapant suivant l'une des revendications 1 à 11, caractérisé en ce que l'élément élastique de mise sous tension (35) est réalisé sous la forme d'un ressort de compression.

26. Dispositif antidérapant suivant la revendication 25, caractérisé en ce que l'axe longitudinal du ressort de mise sous tension (35) est orienté d'une manière pratiquement perpendiculaire à l'axe de la roue (1) du véhicule.

27. Dispositif antidérapant suivant la revendication 25 ou 26, caractérisé en ce que le ressort de mise sous tension (35) est guidé dans une glissière (37).

28. Dispositif antidérapant suivant la revendication 27, caractérisé en ce que la glissière (37) est constituée par une partie, en forme de manchon, de la pièce de jonction (36).

29. Dispositif antidérapant suivant l'une des revendications 25 à 28, caractérisé en ce que le support (38) est relié à la pièce de jonction (36) par l'intermédiaire de tiges de traction (40, 41), disposées en V et agissant sur les extrémités du ressort de mise sous tension (35), ces tiges de traction (40, 41) constituant une tringlerie de commande.

30. Dispositif antidérapant suivant la revendication 29, caractérisé en ce que les extrémités des tiges de traction (40, 41) qui sont situées à l'opposé du ressort de mise sous tension (35) sont reliées d'une manière articulée à l'organe d'actionnement (44).

31. Dispositif antidérapant suivant l'une des revendications 1 à 30, caractérisé en ce que l'organe d'actionnement (44) est pourvu d'au moins une butée (46) servant à l'immobilisation de l'élément élastique de mise sous tension (35) dans la position sous tension.

32. Dispositif antidérapant suivant la revendication 31, caractérisé en ce qu'un cliquet de verrouillage (48) à ressort est associé à la butée (46).

33. Dispositif antidérapant suivant l'une des revendications 1 à 32, caractérisé en ce que le support (38) est rendu solidaire de la pièce de jonction (36) par l'intermédiaire d'une cheville tournante (45).

34. Dispositif antidérapant suivant l'une des revendications 1 à 33, caractérisé en ce qu'il comporte plusieurs éléments (33) de maintien d'un réseau de roulement (10) qui sont reliés d'une manière articulée au support (31).

35. Dispositif antidérapant suivant l'une des revendications 1 à 34, caractérisé en ce qu'un dispositif indicateur de la force de tension est associé à l'élément élastique de mise sous tension (12, 24, 35).

FIGUR 1

FIGUR 2

FIGUR 3

FIGUR 4

FIGUR 5

FIGUR 6

FIGUR 7

FIGUR 8